# EUROPEAN PATENT SPECIFICATION

(11) **EP 4 356 366 B1**
(45) Date of publication and mention of the grant of the patent: **18.11.2026**
(21) Application number: 22825550.1
(22) Date of filing: 08.06.2022
(51) Int. Cl.: G02F 1/155, G09F 9/302

(54) **ELECTRO-OPTIC ELEMENT**
ELECTROOPTISCHES ELEMENT
ELEMENT ELECTRO-OPTIQUE

(30) Priority: 14.06.2021 US 202163210163 P
(43) Date of publication of application: 24.04.2024
(73) Proprietor: GENTEX CORPORATION, Zeeland, Michigan 49464 (US)
(72) Inventor: STRAY, Joel A., Zeeland, Michigan 49464 (US); DOZEMAN, Gary J., Zeeland, Michigan 49464 (US); RICHLICH, Stephen F., Zeeland, Michigan 49464 (US); KOPPEY, Matthew A., Zeeland, Michigan 49464 (US); NEUMAN, George A., Zeeland, Michigan 49464 (US)
(74) Representative: Müller-Boré & Partner Patentanwälte PartG mbB
(86) International application number: PCT/US2022/032610
(87) International publication number: WO 2022/265894

(56) References cited:
- WO-A1-2012/162502
- KR-B1- 101 535 100
- US-A1- 2004 012 836
- US-A1- 2013 222 878
- US-A1- 2016 097 960
- US-A1- 2017 100 991
- US-A1- 2019 265 569
- US-A1- 2021 026 163

## Description

### FIELD OF THE DISCLOSURE

This disclosure relates generally to bus systems, and in particular, to segmented bus systems for electro-optic devices.

### BACKGROUND

In large-area devices such as windows and sunroofs that comprise electro-optic elements, it may be challenging to achieve adequate speed and uniformity of darkening and clearing. The electrical bus design is instrumental to reaching fast and uniform darkening speeds. A thicker bus may increase speed, but it may cause problems with electro-optic elements. Currently-used bus arrangements may result in very slow transitions, may be extremely difficult to apply properly, and may result in performance issues in some configurations.

Buses that are opposite one another may necessitate a thicker cell spacing than desired due to the combined thickness of the buses. Even in configurations that do not have buses opposite one another, it is likely that the buses will cross over one another at least at some point, resulting in thickness interference.

A further challenge may arise when using flexible substrates such as plastic substrates for the electro-optic elements. It may be difficult to have buses adhere to the plastic surface without causing stress and/or cupping. This may be especially true for buses that extend around curved edges and/or corners.

Using a conductive tape as the bus may be desirable on straight sections of the electro-optic device but applying conductive tape around corners produces substantial forces on the substrate. Furthermore, there may be ripples and folds in the tape at the corners, which may result in stresses. The tape may not conform easily to the positioning and may pull away from the substrate or even cause the substrate to peel and cup, resulting in a non-flat substrate.

In configurations that use a monolithic bus and seal combination, it may be difficult to accurately position the bus and seal and to retain it in place during construction of the electro-optic device. Furthermore, a monolithic bus assembly may be expensive to manufacture as the bus may be cut from a single piece of material and the interior portion of the material then discarded.

US 2021/026163 A1 describes an electro-optic element that includes first and second spaced-apart transparent substrates defining respective opposite, aligned first and second edges, a first bus including a first electrode disposed along an inner surface of the first substrate adjacent the first edge and a second electrode disposed along an inner surface of the second substrate adjacent the first edge, and a second bus including a first electrode disposed along an inner surface of the first substrate adjacent the second edge and a second electrode disposed along an inner surface of the second substrate adjacent the second edge. The first bus and second bus are spaced apart along widths of the first and second substrates between the respective first and second edges. An electro-optic medium is disposed between the first and second transparent substrates, including between the first and second electrodes of the first bus and the second bus, respectively.

US 2019/265569 A1 describes an electrochromic device that includes an electrochromic element including an anode electrode, a cathode electrode, and an electrochromic layer, and drive means connected to the electrochromic element. The electrochromic element includes a plurality of anode terminals electrically connected to the anode electrode, and a plurality of cathode terminals electrically connected to the cathode electrode, and each of the anode terminals constitutes a terminal pair in combination with one of the cathode terminals. At least part of a first application period in which the drive means applies a voltage to a first terminal pair that is one of the terminal pairs and at least part of a second application period in which the drive means applies a voltage to a second terminal pair that is another one of the terminal pairs are not overlapped with each other.

US 2004/012836 A1 describes electrooptic devices include a left handed and right handed cholesteric phase liquid crystal layers. Electrodes or magnetic coils are used to apply electric or magnetic fields perpendicular to helical axes of the cholesteric phase liquid crystal layers. The fields lengthen the helical pitch of the liquid crystal layers thereby shifting the reflectance of the liquid crystal layers to longer wavelengths. Spectral reflectance of both left and right hand polarized light is controlled by the electrooptic devices.

### SUMMARY

The underlying technical problem is solved by the subject-matter of the independent claim. Additional embodiments are defined in the dependent claims.

### BRIEF DESCRIPTION OF THE DRAWINGS

FIG. 1A illustrates a cross-sectional side view of a first embodiment of an electro-optic element having buses in accordance with this disclosure;
FIG. 1B illustrates a cross-sectional side view of a second embodiment of an electro-optic element having buses in accordance with this disclosure;
FIG. 2A illustrates an embodiment of a first bus arrangement on a substrate of an electro-optic element in accordance with this disclosure;
FIG. 2B illustrates an embodiment of a second bus arrangement on a substrate of an electro-optic element in accordance with this disclosure;
FIG. 3 illustrates an embodiment of a third bus arrangement on a substrate of an electro-optic element in accordance with this disclosure;
FIG. 4 illustrates an embodiment of a fourth bus arrangement on a substrate of an electro-optic element in accordance with this disclosure;
FIG. 5 illustrates a top view of an embodiment of a bus arrangement on an electro-optic element in accordance with this disclosure;
FIG. 6A illustrates a first configuration of the placement of two bus segments in relation to one another in accordance with this disclosure;
FIG. 6B illustrates a second configuration of the placement of two bus segments in relation to one another in accordance with this disclosure;
FIG. 6C illustrates a third configuration of the placement of two bus segments in relation to one another in accordance with this disclosure; and
FIG. 6D illustrates a fourth configuration of the placement of two bus segments in relation to one another in accordance with this disclosure.

### DETAILED DESCRIPTION

Buses for large-area devices may require equal, balanced anode and cathode representation in order to achieve desired performance. To further ensure desired performance characteristics, such as adequate speed of darkening and clearing and for solution phase balance of an electro-optic medium, it is desirable to have both electrode portions present.

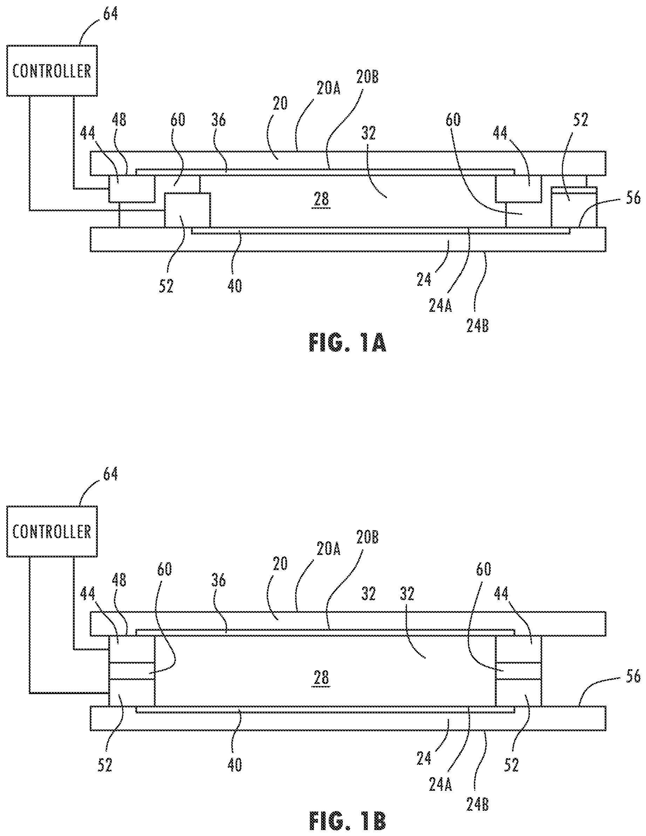

Referring to FIGS. 1A and 1B, a large-area device may comprise an electro-optic element, shown generally at 10. Electro-optic element 10 comprises a first substrate 20 and an opposed second substrate 24 which may define a cavity 28 therebetween. An electro-optic medium 32 may be disposed between first substrate 20 and second substrate 24 within cavity 28. First substrate 20 may have a first, outer surface 20A and a second, inner surface 20B, and second substrate 24 may have a third, inner surface 24A and a fourth, outer surface 24B. First and second substrates 20, 24 may be in a spaced-apart relationship and are generally parallel to and coextensive with one another. One or more layers of electrically conductive coatings 36 may be disposed on second surface 20A of first substrate 20 and may serve as a first electrode for electro-optic element 10. Similarly, one or more layers of electrically conductive coatings 40 may be disposed on third surface 24A of second substrate 24 and may serve as a second electrode for electro-optic element 10. When a voltage is applied to electro-optic medium 32 through electrode coatings 36, 40, electro-optic medium 32 may be capable of changing properties, either darkening or clearing from a darkened state.

A first bus 44 is disposed on second surface 20A of first substrate 20, generally along at least a portion of a perimeter 48 of first substrate 20; and a second bus 52 is disposed on third surface 24A of second substrate 24, generally along at least a portion of a perimeter 56 of second substrate 24. First bus 44 may contact a portion of first electrode 36, and second bus 52 may contact a portion of second electrode 40.

As shown in FIG. 1B, first bus 44 may be disposed in a "stacked" configuration, opposed to second bus 52. An electrically insulating material 60 may be disposed between first bus 44 and second bus 52 to prevent first and second buses 44, 52 from contacting one another and shorting out electro-optic element 10. In some embodiments, electro-optic element 10 may be laminated. On a laminated electro-optic element 10, the gap between first bus 44 and second bus 52 may be filled prior to lamination. Filling in the gap may also address uneven portions within the laminate stack. This arrangement may result in a relatively thick electro-optic element 10, with first and second substrates 20, 24 spaced sufficiently far apart to accommodate first bus 44, second bus 52, and electrically insulating material 60.

As shown in FIG. 1A, in some embodiments, second bus 52 may extend adjacent to first bus 44. In this arrangement, first and second buses 44, 52 are disposed generally side-by-side. This arrangement may allow for a thinner device than described in reference to FIG. 1B as the space between first and second substrates 20, 24 may be less than the combined thicknesses of first and second buses 44, 52. In this arrangement, the gap between first bus 44 and second bus 52 may be filled with material to eliminate any air gap and to prevent air from reaching electro-optic medium 32.

A controller 64 is configured to be in selective electrical communication with first and second buses 44, 52. Controller 64 is configured to independently control a first voltage applied to first bus 44 and a second voltage applied to second bus 52. Applying first and/or second voltage to buses may cause electro-optic element 10 to darken or to clear by coloring or clearing electro-optic medium 32, thereby controlling the amount of light passing through electro-optic element 10.

Both first bus 44 and second bus 52 may comprise a non-continuous bus having a plurality of discrete bus segments 68. Bus segments 68 may be in balanced pairs, with each bus segment 68 of first bus 44 corresponding to a bus segment 68 in second bus 52. Each pair of bus segments 68 may be in a balanced, anodic and cathodic form, with one bus segment 68 of the pair being anodic and the other bus segment 68 of the pair being cathodic. At least one of the pairs of bus segments 68 in a pair of buses 44, 52 may comprise external contact wires or external contact portions 76. The wires or external contact portions 76 of bus segments 68 may extend past an edge of substrate 20, 24 to allow for an external electrical connection to the bus.

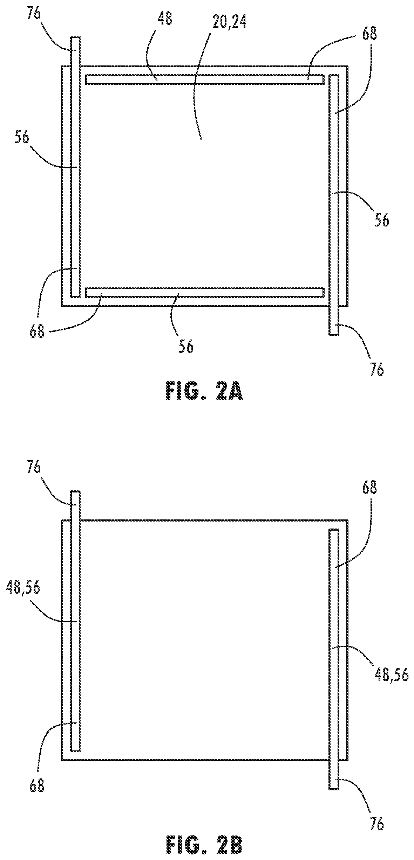

Each bus segment 68 may be configured to extend along a portion of perimeter 48, 56 of first or second substrate 20, 24. In some embodiments, perimeters 48, 56 of first and/or second substrates 20, 24 may comprise one or more generally straight sections. Straight bus segments 68 may extend along generally straight portions of perimeter 48, 56 of first and second substrates 20, 24. In some embodiments, as shown in FIG. 2A, straight bus segments 68 may be disposed along the generally straight sections of perimeters 48, 56 of first and second substrates 20, 24 to extend around all sides of substrate 20, 24. In some embodiments, as shown in FIG. 2B, bus segments 68 may be disposed along only some of the sections of perimeters 48, 56 of first and second substrates 20, 24. In either case, bus segments 68 may be independently powered, shorted, or powered in an opposite polarity to create unique darkening/clearing effects.

In some embodiments, straight bus segments 68 may comprise a conductive tape. The tape may comprise a metal portion and an electrically conductive (in the Z direction) pressure sensitive tape. Using a plurality of bus segments 68 including straight bus segments 68 comprising a tape may result in less waste than using a monolithic piece of material for first and second buses 44, 52.

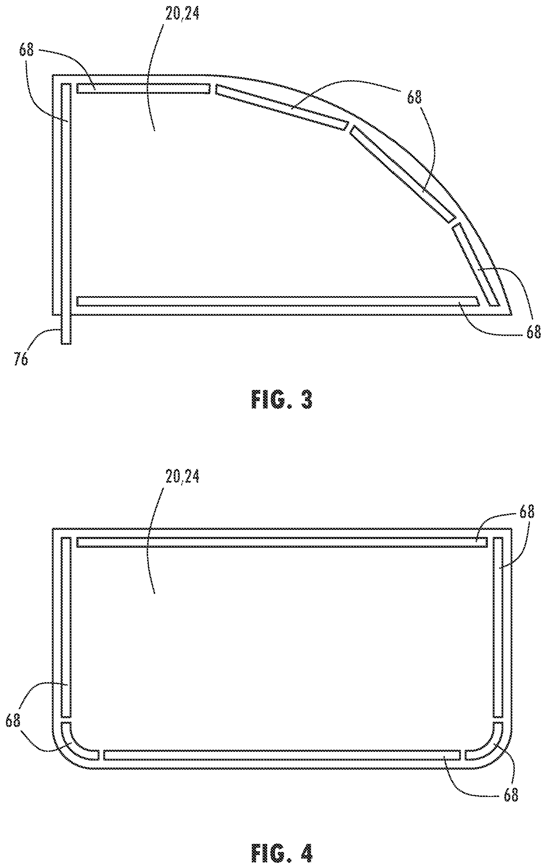

In some embodiments, bus segments 68 may need to conform to non-geometric shapes such as arcs, angles, and the like. As shown in FIGS. 3-5, electro-optic element 10 may have one or more curved portions of perimeter 48, 56. Straight bus segments 68 may be disposed along the straight portions of perimeter 48, 56. In addition, as shown in FIG. 3, a plurality of straight bus segments 68 may be disposed along the curved portion(s) of perimeter 48, 56. Straight bus segments 68 disposed along curved portions of perimeter 48, 56 may be short enough to remain in close proximity to perimeter 48, 56 and not extend far enough into the center of electro-optic element 10 to be visible to a viewer. The number of bus segments 68 chosen may involve a balance between the number of straight bus segments 68 to segment the curved portions of perimeter 48, 56 with straight sections while not decreasing performance due to resistance buildup as a result of having multiple gaps. As in the previous examples, at least one straight bus segment 68 may comprise an external contact portion 76 extending past the edge of substrate to allow for an external electrical connection to bus.

As shown in FIG. 4, in some embodiments, first and second buses 44, 52 may comprise a plurality of bus segments 68, some straight and some curved, disposed around perimeters 48, 56 of opposed surfaces of first and second substrates 20, 24 in order to provide the desired coverage. Curved bus segments, straight bus segments, or a combination of curved and straight bus segments 68 may be disposed along curved portions of perimeters 48, 56 of first and second substrates 20, 24 of electro-optic element 10. Curved bus segments 68 may be used on tighter curves or smaller-radius curves than straight bus portions. Curved bus segments 68 may be pre-formed to conform to a curved portion of perimeter 48, 56 of first and/or second substrate 20, 24. Pre-formed curved bus segments 68 may then be applied to substrate. During manufacture, bus segments 68 may be placed onto substrate after other layers, such as electrodes 36, 40, have been applied and cured, thereby simplifying manufacturing.

In some embodiments, (not shown) first and second buses 44, 52 may comprise only curved bus segments 68.

The use of bus segments 68, including straight bus segments 68 and/or curved bus segments 68, may reduce or eliminate the stresses and/or strains on the underlying substrate 20, 24. Particularly when plastic substrates are used, the use of bus segments 68 may reduce or prevent cupping of substrate 20, 24. It may also allow higher performance of electro-optic element 10.

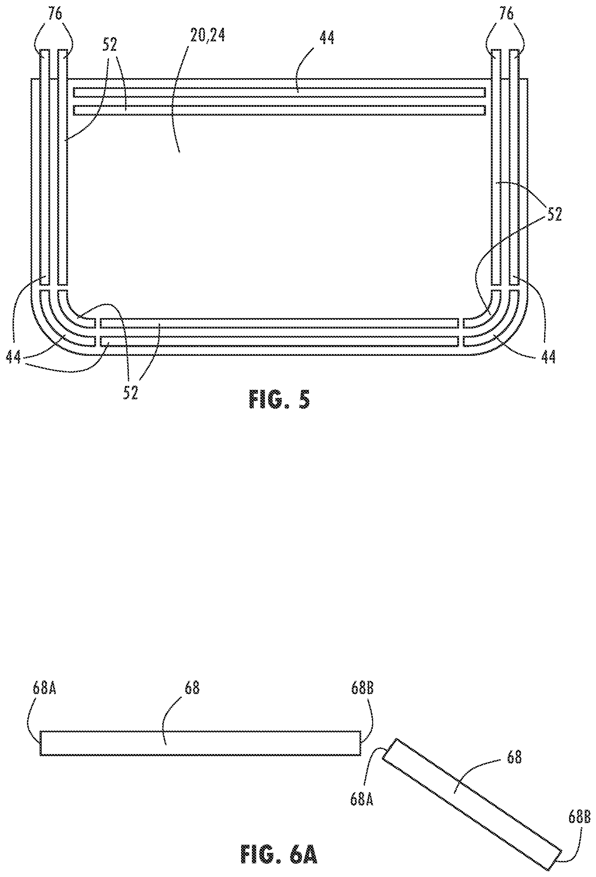

As shown in FIG. 5, first bus 44 and second bus 52 are disposed to be generally parallel to one another along the length of perimeters 48, 56 of first and second substrates 20, 24 of electro-optic element 10. One bus 44, 52 or bus segments 68 from one bus is closer to perimeter 48, 56 than the other bus 52,44 or bus segments 68 from other bus. Both buses have at least one external contact portion 76 that extends past the edge of substrate 20, 24 to allow for an external electrical connection to bus. One of first and second buses 44, 52 comprises the anode, and the other bus 44, 52 comprises the cathode.

Referring now to FIGS. 6A-6D, each bus segment 68 may have a first end 68A and a second end 68B. First end 68A of one bus segment 68 may be in proximity to second end 68B of another bus segment 68. In some embodiments a gap may separate first end 68A of one bus segment 68 from second end 68B of another bus segment 68 so that the ends 68A, 68B of bus segments 68 do not contact one another, as shown in FIG. 6A. In this configuration, due to the space between the ends 68A, 68B of bus segments 68, there may be significant resistance between the two bus segments 68.

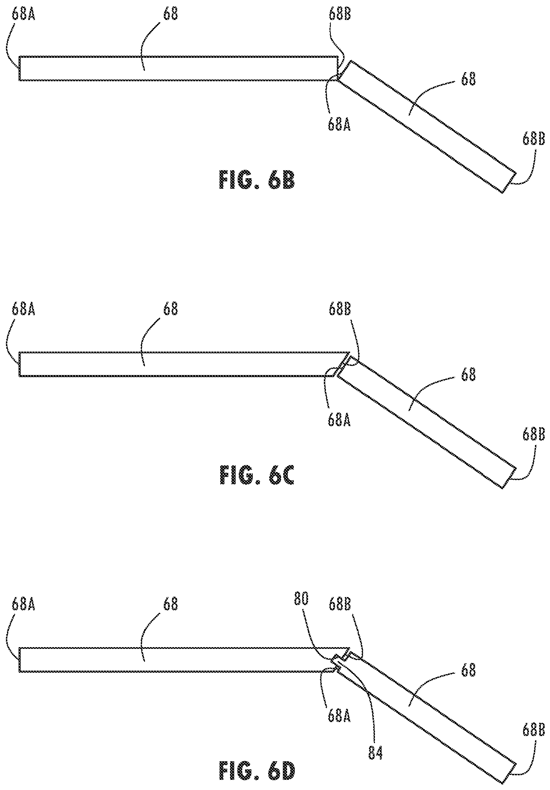

In some embodiments, as shown in FIG. 6B, first end 68A of one bus segment 68 may contact second end 68B of another bus segment. First and second bus segments 68 may be in contact only at a corner or corners of bus segments 68. Thus, although first and second bus segments 68 may both be disposed on substrate and are in contact with one another, they are not in a stacked configuration, with part of one bus segment 68 on top of part of another bus segment 68, but rather lie flat on substrate 20, 24. This arrangement may allow for a thinner electro-optic element 10, but may still have higher resistance due to the limited contact between bus segments 68 than desirable.

In some embodiments, to reduce resistance between bus segments 68, at least one of the ends of bus segments 68 that are to be disposed end-to-end with one another may be angled, and first bus segment 68 and second bus segment 68 may be in contact along all or part of the length of the ends of the bus segments 68. As shown in FIG. 6C, a second end 68B of a first bus segment 68 is angled while a first end 68A of a second bus segment 68 is not angled, although both second end 68B of first bus segment 68 and first end 68AB of second bus segment 68 may be angled and still be within the scope of this disclosure. The angled end may increase the interface between second end 68B of first bus segment 68 and first end 68A of second bus segment 68 while still keeping both bus segments 68 on the same plane rather than stacking them. This may reduce resistance between first bus segment 68 and second bus segment 68 without affecting the required cell spacing.

In another embodiment, as shown in FIG. 6D, to further increase the interface between first and second bus segments 68, a finger or other protrusion 80 may extend from a first end 68A of first bus segment 68, and may fit into an opening 84 defined by second end 68B of second bus segment 68.

The above description is considered that of the preferred embodiments only. Modifications of the disclosure will occur to those skilled in the art and to those who make or use the disclosure. Although only a few embodiments of the present innovations have been described in detail in this disclosure, those skilled in the art who review this disclosure will readily appreciate that many modifications are possible (e.g., variations in sizes, dimensions, structures, shapes and proportions of the various elements, values of parameters, mounting arrangements, use of materials, colors, orientations, etc.). For example, elements shown as integrally formed may be constructed of multiple parts, or elements shown as multiple parts may be integrally formed, the operation of the interfaces may be reversed or otherwise varied, the length or width of the structures and/or members or connector or other elements of the system may be varied, the nature or number of adjustment positions provided between the elements may be varied.

In this document, relational terms, such as first and second, top and bottom, front and back, left and right, vertical, horizontal, and the like, are used solely to distinguish one entity or action from another entity or action, without necessarily requiring or implying any actual such relationship, order, or number of such entities or actions. These terms are not meant to limit the element which they describe, as the various elements may be oriented differently in various applications. Furthermore, it is to be understood that the device may assume various orientations and step sequences, except where expressly specified to the contrary. It is also to be understood that the specific devices and processes illustrated in the attached drawings and described in the following specification are simply exemplary embodiments of the inventive concepts defined in the appended claims. Hence, specific dimensions and other physical characteristics relating to the embodiments disclosed herein are not to be considered as limiting, unless the claims expressly state otherwise.

It will be understood that any described processes or steps within described processes may be combined with other disclosed processes or steps to form structures within the scope of the present disclosure. The exemplary processes disclosed herein are for illustrative purposes and are not to be construed as limiting. It is also to be understood that variations and modifications can be made on the aforementioned methods without departing from the concepts of the present disclosure, and further it is to be understood that such concepts are intended to be covered by the following claims unless these claims by their language expressly state otherwise.

As used herein, the term "and/or," when used in a list of two or more items, means that any one of the listed items can be employed by itself, or any combination of two or more of the listed items can be employed. For example, if a composition is described as containing components A, B, and/or C, the composition can contain A alone; B alone; C alone; A and B in combination; A and C in combination; B and C in combination; or A, B, and C in combination.

As used herein, the term "about" means that amounts, sizes, formulations, parameters, and other quantities and characteristics are not and need not be exact, but may be approximate and/or larger or smaller, as desired, reflecting tolerances, conversion factors, rounding off, measurement error and the like, and other factors known to those of skill in the art. When the term "about" is used in describing a value or an end-point of a range, the disclosure should be understood to include the specific value or end-point referred to. Whether or not a numerical value or end-point of a range in the specification recites "about," the numerical value or end-point of a range is intended to include two embodiments: one modified by "about," and one not modified by "about." It will be further understood that the end-points of each of the ranges are significant both in relation to the other end-point, and independently of the other end-point.

The terms "substantial," "substantially," and variations thereof as used herein are intended to note that a described feature is equal or approximately equal to a value or description. For example, a "substantially planar" surface is intended to denote a surface that is planar or approximately planar. Moreover, "substantially" is intended to denote that two values are equal or approximately equal. In some embodiments, "substantially" may denote values within at least one of 2% of each other, 5% of each other, and 10% of each other.

## Claims

1. An electro-optic element (10), comprising:
a first substrate (20) having an inner surface;
a second substrate (24) having an inner surface opposed to the inner surface of the first substrate (20), the second substrate (24) generally parallel to and coextensive with the first substrate (20);
a first bus (44) having a first bus segment disposed on the inner surface of the first substrate (20) and extending along a first portion of a perimeter (48) of the first substrate (20) and a second bus segment disposed on the inner surface of the first substrate (20) and extending along a second portion of the perimeter (48) of the first substrate (20);
a second bus (52) having a third bus segment disposed on the inner surface of the second substrate (24) and extending along a first portion of a perimeter (48) of the second substrate (24) in parallel with and in proximity to the first bus segment of the first bus (44), and a fourth bus segment disposed on the inner surface of the second substrate (24) and extending along a second portion of the perimeter (48) of the second substrate (24) in parallel to and in proximity to the second bus segment of the first bus (44); and
a controller (64) configured to be in selective electrical communication with the first and second buses (44, 52) and capable of independently controlling a voltage applied to the first bus segment and the second bus segment of the first bus (44) and a voltage applied to the third bus segment and the fourth bus segment portion of the second bus (52),
wherein the first bus (44) and the second bus (52) have at least one external contact portion (76) that extends past an edge of the first substrate (20) to allow for an external electrical connection to the first bus (44) and the second bus (52), and
wherein one of the first bus (44) and the second bus (52) comprises an anode and the other one of the first bus (44) and the second bus (52) comprises a cathode and **characterized in that** the first bus segment is closer to the first portion of the perimeter (48) than the third bus segment, and the second bus segment is closer to the second portion of the perimeter (48) than the fourth bus segment.

2. The electro-optic element (10) of claim 1, wherein the second bus segment is in a spaced apart relationship with the first bus segment of the first bus (44) and the fourth bus segment is in a spaced-apart relationship with the third bus segment of the second bus (52)

3. The electro-optic element (10) of one of the previous claims, wherein the first and third bus segments are straight.

4. The electro-optic element (10) of claim 3, wherein the second and fourth bus segments are curved.

5. The electro-optic element (10) of one of the previous claims, wherein an end of the first bus segment is angled and the angled end is disposed adjacent to an end of the second bus segment to increase the interface with the end of the second bus segment.

6. The electro-optic element (10) of one of the previous claims, wherein a finger (80) extends from the first end of the first bus segment and is configured to fit within an opening in the first end of the second bus segment.

## Patentansprüche

1. Ein elektrooptisches Element (10), umfassend:
ein erstes Substrat (20) mit einer Innenfläche;
ein zweites Substrat (24) mit einer Innenfläche, die der Innenfläche des ersten Substrats (20) gegenüberliegt, wobei das zweite Substrat (24) im Wesentlichen parallel zum ersten Substrat (20) verläuft und sich über denselben Bereich erstreckt;
einen ersten Bus (44) mit einem ersten Bussegment, das auf der Innenfläche des ersten Substrats (20) angeordnet ist und sich entlang eines ersten Abschnitts eines Umfangs (48) des ersten Substrats (20) erstreckt, sowie einem zweiten Bussegment, das auf der Innenfläche des ersten Substrats (20) angeordnet ist und sich entlang eines zweiten Abschnitts des Umfangs (48) des ersten Substrats (20) erstreckt;
einen zweiten Bus (52) mit einem dritten Bussegment, das auf der Innenfläche des zweiten Substrats (24) angeordnet ist und sich entlang eines ersten Abschnitts eines Umfangs (48) des zweiten Substrats (24) parallel zu und in der Nähe des ersten Bussegments des ersten Busses (44) erstreckt, sowie einem vierten Bussegment, das auf der Innenfläche des zweiten Substrats (24) angeordnet ist und sich entlang eines zweiten Abschnitts des Umfangs (48) des zweiten Substrats (24) parallel zu und in der Nähe des zweiten Bussegments des ersten Busses (44) erstreckt; und
eine Steuereinrichtung (64), die dazu konfiguriert ist, in selektiver elektrischer Verbindung mit dem ersten und dem zweiten Bus (44, 52) zu stehen, und die in der Lage ist, eine an das erste und das zweite Bussegment des ersten Busses (44) angelegte Spannung sowie eine an das dritte Bussegment und den vierten Bussegmentabschnitt des zweiten Busses (52) angelegte Spannung unabhängig voneinander zu steuern,
wobei der erste Bus (44) und der zweite Bus (52) mindestens einen externen Kontaktabschnitt (76) aufweisen, der sich über eine Kante des ersten Substrats (20) hinaus erstreckt, um eine externe elektrische Verbindung mit dem ersten Bus (44) und dem zweiten Bus (52) zu ermöglichen, und
wobei einer des ersten Busses (44) und des zweiten Busses (52) eine Anode umfasst und der andere des ersten Busses (44) und des zweiten Busses (52) eine Kathode umfasst, und
**dadurch gekennzeichnet, dass**
das erste Bussegment näher am ersten Abschnitt des Umfangs (48) liegt als das dritte Bussegment **und dass** das zweite Bussegment näher am zweiten Abschnitt des Umfangs (48) liegt als das vierte Bussegment.

2. Das elektrooptische Element (10) nach Anspruch 1, wobei das zweite Bussegment in einem beabstandeten Verhältnis zum ersten Bussegment des ersten Busses (44) angeordnet ist, und das vierte Bussegment in einem beabstandeten Verhältnis zum dritten Bussegment des zweiten Busses (52) angeordnet ist

3. Das elektrooptische Element (10) nach einem der vorstehenden Ansprüche, wobei das erste und das dritte Bussegment gerade sind.

4. Das elektrooptische Element (10) nach Anspruch 3, wobei das zweite und das vierte Bussegment gekrümmt sind.

5. Das elektrooptische Element (10) nach einem der vorstehenden Ansprüche, wobei ein Ende des ersten Bussegments abgewinkelt ist und das abgewinkelte Ende benachbart zu einem Ende des zweiten Bussegments angeordnet ist, um die Kontaktfläche mit dem Ende des zweiten Bussegments zu vergrößern.

6. Das elektrooptische Element (10) nach einem der vorstehenden Ansprüche, wobei sich ein Finger (80) von dem ersten Ende des ersten Bussegments erstreckt und dazu konfiguriert ist, in eine Öffnung im ersten Ende des zweiten Bussegments zu passen.

## Revendications

1. Un élément électro-optique (10), comprenant :
un premier substrat (20) présentant une surface interne ;
un deuxième substrat (24) présentant une surface interne opposée à la surface interne du premier substrat (20), le deuxième substrat (24) étant sensiblement parallèle au premier substrat (20) et coextensif avec celui-ci ;
un premier bus (44) présentant un premier segment de bus disposé sur la surface interne du premier substrat (20) et s'étendant le long d'une première partie d'un périmètre (48) du premier substrat (20), ainsi qu'un deuxième segment de bus disposé sur la surface interne du premier substrat (20) et s'étendant le long d'une deuxième partie du périmètre (48) du premier substrat (20) ;
un deuxième bus (52) présentant un troisième segment de bus disposé sur la surface interne du deuxième substrat (24) et s'étendant le long d'une première partie d'un périmètre (48) du deuxième substrat (24), parallèlement au premier segment de bus du premier bus (44) et à proximité de celui-ci, ainsi qu'un quatrième segment de bus disposé sur la surface interne du deuxième substrat (24) et s'étendant le long d'une deuxième partie du périmètre (48) du deuxième substrat (24), parallèlement au deuxième segment de bus du premier bus (44) et à proximité de celui-ci ; et
un dispositif de commande (64) configuré pour être en communication électrique sélective avec les bus premier et deuxième (44, 52) et capable de commander indépendamment une tension appliquée au premier segment de bus et au deuxième segment de bus du premier bus (44) ainsi qu'une tension appliquée au troisième segment de bus et à la partie de quatrième segment de bus du deuxième bus (52),
sachant que le premier bus (44) et le deuxième bus (52) présentent au moins une partie de contact externe (76) qui s'étend au-delà d'un bord du premier substrat (20) afin de permettre une connexion électrique externe au premier bus (44) et au deuxième bus (52), et
sachant que l'un parmi le premier bus (44) et le deuxième bus (52) comprend une anode et que l'autre parmi le premier bus (44) et le deuxième bus (52) comprend une cathode, et
**caractérisé en ce que**
le premier segment de bus est plus proche de la première partie du périmètre (48) que le troisième segment de bus, et que le deuxième segment de bus est plus proche de la deuxième partie du périmètre (48) que le quatrième segment de bus.

2. L'élément électro-optique (10) d'après la revendication 1, sachant que le deuxième segment de bus est dans une relation espacée avec le premier segment de bus du premier bus (44) et que le quatrième segment de bus est dans une relation espacée avec le troisième segment de bus du deuxième bus (52)

3. L'élément électro-optique (10) d'après l'une des revendications précédentes, sachant que les segments premier et troisième de bus sont droits.

4. L'élément électro-optique (10) d'après la revendication 3, sachant que les segments deuxième et quatrième de bus sont incurvés.

5. L'élément électro-optique (10) d'après l'une des revendications précédentes, sachant qu'une extrémité du premier segment de bus est coudée et que l'extrémité coudée est disposée de manière adjacente à une extrémité du deuxième segment de bus afin d'augmenter la surface de contact avec l'extrémité du deuxième segment de bus.

6. L'élément électro-optique (10) d'après l'une des revendications précédentes, sachant que le doigt (80) s'étend depuis la première extrémité du premier segment de bus et est configuré pour s'insérer dans une ouverture ménagée dans la première extrémité du deuxième segment de bus.
